Europäisches Patentamt

European Patent Office

Office européen des brevets

(19)

(11) Publication number: **0 246 915 B1**

# EUROPEAN PATENT SPECIFICATION

(12)

(45) Date of publication of patent specification: 28.08.91    (51) Int. Cl.⁵: **B64C 21/10, B63B 1/34**

(21) Application number: 87304578.5

(22) Date of filing: 22.05.87

(54) Control of boundary layer flow.

(30) Priority: 22.05.86 GB 8612486
19.03.87 GB 8706554

(43) Date of publication of application:
25.11.87 Bulletin 87/48

(45) Publication of the grant of the patent:
28.08.91 Bulletin 91/35

(84) Designated Contracting States:
DE FR GB SE

(56) References cited:
EP-A- 0 205 289
EP-A- 0 216 384

AIAA'83 - AIAA 21st AEROSPACE SCIENCES
MEETING, Reno, Nevada, 10th-13th January
1983, pages 6,18, American Institute of Aero-
nautics and Astronautics, New York, US;
D.M. BUSHNELL: "AIAA-83-0227 - Turbulent
drag reduction for external flows"

MECHANICAL ENGINEERING, vol. 103, no. 3,
March 1981, page 71, New York, US;
"Grooves reduce aircraft drag"

(73) Proprietor: **ROLLS-ROYCE plc**
**65 Buckingham Gate**
**London, SW1E 6AT(GB)**

(72) Inventor: **Savill, Anthony Mark**
**46 Histon Road**
**Cambridge(GB)**

(74) Representative: **Dargavel, Laurence Peter**
**Rolls-Royce plc Patents Department P.O.**
**Box 31 Moor Lane**
**Derby DE2 8BJ(GB)**

## Description

DESCRIPTION FOR SE

This invention is concerned with the modification of turbulent boundary layer flows over aerodynamic and hydrodynamic surfaces.

There have been many investigations in recent years of the effects that small-geometry surface configurations can have on turbulent boundary layers. Particular attention has been paid to the provision of so-called riblet surfaces in which an array of small longitudinal ribs extend over the turbulent boundary layer region of a surface in the direction of fluid flow over the surface, and experimental results indicate that net or surface drag reductions of up to about 7% can be achieved.

In a paper "Drag Characteristics of V-Groove and Transverse Curvature Riblets" (presented by M.J. Walsh at the Symposium on Viscous Drag Reduction, Dallas, Texas, November 7-8, 1979) reference is made to an early investigation (1966) by Liu, Kline, and Johnston in which drag reductions of 3-4% were obtained by reducing the turbulent bursting rate (i.e. the rate of break-up of the low speed longitudinal vortices or "streaks" that are characteristically formed in a turbulent boundary layer flow close to a wall) by employing rectangular fins. Walsh's paper reports the investigation of a number of alternative rib profiles and states that he was able to obtain a maximum drag reduction of 7% using V-groove riblets, this representing substantially the greatest reduction of skin friction drag that experimenters have been able to obtain up to the present.

The drag reduction may be associated with the ability of the riblets to limit random spanwise movements of the streaks, as has been suggested by a number of sources, e.g. R.E. Falco (AIAA-83-0377, AIAA 21st Aerospace Sciences Meeting, January 10-13 1983, Reno, Nevada). Johansen and Smith (AIAA-85-0547, AIAA-Shear Flow Control Conference, March 12-14, 1985, Boulder, Colorado) have shown that cylindrical riblets of a smaller height than the V-groove riblets with which Walsh obtained his optimum results, have the effect of anchoring and/or creating sites of low-speed streaks in a limited region above the wall surface, but their experiments also showed drag increases of 3% to 8%. More recently, S.P. Wilkinson (abstract of paper read at "Drag Reduction and Boundary Layer Control Symposium", 22-25 October 1985 at the National Academy of Sciences, Washington D.C.) has attempted to follow Johansen and Smith by using blade riblets to anchor or create low-speed streaks by the use of riblets and then use V-groove riblets between the streak anchors to control bursting, but it is not yet reported whether a net drag reduction has been achieved thereby.

The results reported from these and other previous investigations all show the effect of riblets is rather limited, and that has led to the search for alternative solutions.

It has been proposed (U.S. patent application 686959 of M.J. Walsh et al - NASA Case LAR-13286-1) to reduce skin friction more effectively by providing a riblet surface with superimposed large-eddy break-up devices (LEBU's) as manipulators for the outer region of the boundary layer but such an arrangement adds considerable complexity and is susceptible to wear and especially accidental damage. In another proposal ("On the Drag Reduction of the Shark Skin", Bechert, Hoppe and Reif, AIAA-85-0546) it has been suggested that it may be appropriate to use so-called vortex generator surfaces which are configured so as to produce tangential mixing using local flow conditions over a ridge-pattern structure analogous to the configuration of scales on a shark's skin. It is claimed that this could lead to greater drag reduction, but it would also be inherently complicated and difficult to build up a simulation of the scaly surface that the investigators have concluded is responsible for the low drag characteristic.

In contrast to these attempts to reduce skin friction by rather complex means, riblet surfaces are less susceptible to damage and they can be formed relatively straightforwardly, e.g. by machining or pressing or by the application of a preformed, e.g. extruded layer. It would clearly be preferable to employ such surfaces if they were able to give greater reductions of skin friction drag.

The mechanisms by which the riblets on such surfaces work is not yet fully understood and it is perhaps significant that different researchers have published conflicting data about the variation of net reduction of skin friction with rib length. If it can be postulated that riblets bring a turbulent boundary layer flow closer to laminar flow conditions their efficiency is low, bearing in mind that in equivalent turbulent and laminar flow regions the skin friction drag with laminar flow would be 80% less than that with turbulent flow. If a more significant proportion of this potential improvement could be achieved, the use of riblet surfaces could offer marked advantages over the complex drag reduction systems described above.

According to the present invention, there is provided an aerodynamic or hydrodynamic wall surface which is provided with a series of elongate projections extending in the direction of fluid flow relative to the surface for modification of a turbulent boundary layer on said surface, said projections being disposed in a repeated spanwise pattern in which the adjacent projections in each pattern repeat project to different heights.

The projections preferably form a substantially continuous spanwise array of riblets. It is also preferred to form the projections with sharp-peaked profiles.

In the simplest example, the repeated pattern consists of alternating higher and lower riblets. It is possible, however, to form a pattern of riblets of three, or even more than three, heights that will provide advantages over the known uniform height riblet surfaces. Such patterns are preferably symmetrical.

Considering the example of alternating higher and lower riblets, the lower riblets function to inhibit turbulent eddy motions in the boundary layer from penetrating to all parts of the wall surface, in particular deep into their grooves, resulting in a displacement of the turbulent motion away from the wall with the establishment of a virtual surface some 3/4 of their height above the wall. The alternating higher riblets are so scaled in relation to the lower riblets and the boundary layer thickness that they have the function of extending this effect to its limit; because of their greater scale their action is complementary to that of the lower riblets and the turbulent eddy motions are kept further from the wall surface.

If the pattern consisted of three different heights, this effect is taken a stage further, but the additional improvement would now be less than the improvement already given by a pattern of ribs of two different heights. The use of a pattern with ribs of substantially more than three different heights will not generally give sufficient further improvement to justify its complexity.

It appears to be the case that riblets of the kind already known function wholly or primarily in a passive manner and do not have any significant influence on the evolution of the eddies themselves. This may also be true of the wall surface configurations of the present invention, but a greater reduction of skin friction can be obtained because, in addition to providing their own contribution the lower riblets modify the deep boundary layer region so that the higher riblets can be similarly operative at a greater distance from the wall surface.

Depending upon their profile, the riblets may also have some effect in inhibiting the spanwise gradients associated with the formation of longitudinal vortices or "streaks" in the boundary layer and initiating secondary, smaller-scale longitudinal eddies. However, in view of the relatively small drag reductions obtained in the published investigations of riblet surfaces, this would seem not to be a major effect, and the improvement offered by the present invention does not rely on the riblets having such an influence.

The relatively low efficiency of the known riblet surfaces may also be because their performance tends to be self-limiting. The displacement of turbulent eddy motions away from the wall surface by the riblets tends to reduce the wall shear stress, which has a scaling influence reducing the effective height of the riblets, and therefore curbing their efficiency. In the present invention, the higher riblets are present to reinforce the action of the lower riblets and so force the turbulent eddy motions further from the wall surface. At the same time this automatically compensates for any loss of efficiency of the smaller riblets. Another secondary benefit is also obtainable because there is some degree of progressive reduction of with the stream development length (i.e. the streamwise distance along the wall surface) that may be significant in the transition region and the early part of the turbulent boundary layer. The smaller riblets of a suitable height for an early region of the turbulent boundary layer will therefore progressively show less effect along their length, but the higher riblets now present extend the effective area of the ribbing to a greater stream development length.

In a preferred configuration according to the present invention, at least the higher riblets have side faces that are inclined at an angle that varies over the height of the projections, each said side face having an intermediate region at a lesser steepness than the adjacent regions above and below said region and forming the lower part of a concave profile peak of the associated projection. In the simplest case, in which the pattern of projections consists of alternating higher and lower projections, smaller and higher projections can be arranged to displace turbulent eddy motions in the boundary layer away from the wall surface. Whereas the smaller projections by themselves would not be able to establish a virtual surface above the wall surface by more than about three-quarters of their length, the higher projection can be so scaled in relation to the smaller projections that they have the function of extending this effect to its limit.

For best effect the transition to the concave-sided peaks should be positioned at or close to the virtual wall height established by the projections. The region below the transition preferably has substantially planar faces so as to form a series of steep-sided V-grooves between the projections in their lowest reaches. These can act in the manner already described to displace the turbulent motion away from the wall surface. The longitudinal vortices displaced above the virtual wall surface are then controlled by the concave peaks projecting into this region which, by virtue of their different profile, can act more strongly on the vortices. If the enhanced displacement of the virtual wall surface resulting from the combination of projection heights puts that virtual surface above the height of the smallest projections, no benefit is achieved by modifying their side faces. To the extent that any of the smaller projections extends above the virtual wall position, it is an advantage that their side faces be given a varied inclination similarly, with the transition substantially at the height of the virtual wall position. This may result in a change of inclination occurring at a particular height above the actual wall surface that is the origin of the projections, but in particular cases the pattern of projections may produce a virtual wall surface height that varies spanwise with the projection pattern, and the positions of the changes of inclination on the individual projections can then follow those changes of height.

The transition to the concave profile may be substantially sharp-edged, but it is also possible to have a radiussed or chamfered transition. The concave faces are preferably continuously curved to a relatively sharp-edged tip but it is also possible to build them up from a group of straight and/or curved sections and for convenience the tip itself may be flattened or radiussed.

By way of example, reference will now be made to the accompanying drawings, in which:

Fig. 1 illustrates in schematic form a transverse cross-section through a wall surface formed in accordance with the invention, perpendicular to the flow direction over the surface, and

Figs. 2 to 9 illustrate a number of modifications that can be applied individually or in combination to the configuration in Fig. 1.

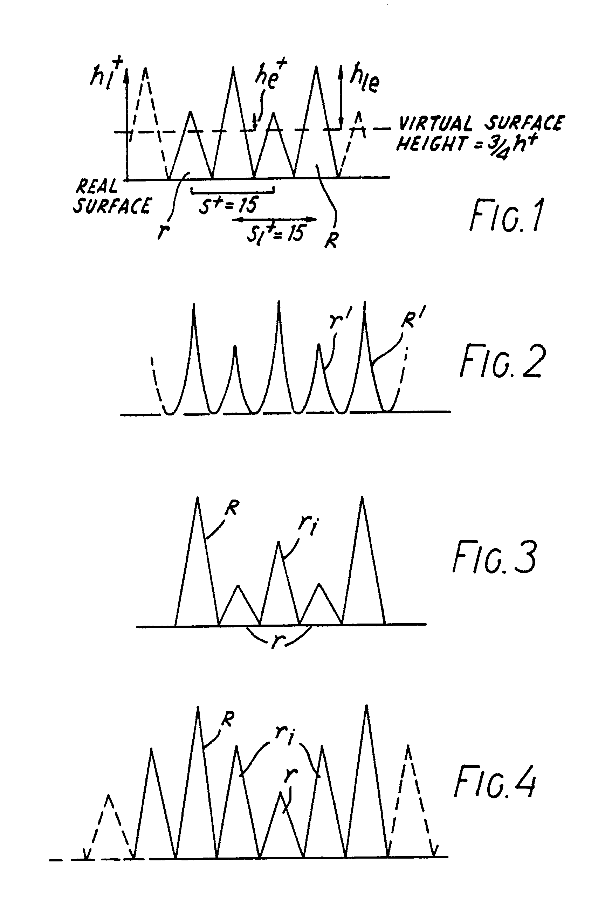

Referring to Fig 1. the wall surface is shown with alternating higher riblets R and lower riblets r, this pattern being repeated spanwise and the riblets running in the stream direction over the surface in the turbulent boundary layer region, and preferably starting from the transition region of the flow over the surface The pattern extending streamwise preferably continues over all the turbulent boundary layer area of the surface. It is not essential that the riblets be aligned precisely with the fluid stream and deviations of up to 10°-15° can be tolerated The riblets are all shown with triangular profiles, but other profiles can be used, another preferred profile having a sharp-peaked from (apex included angle preferably not greater than about 20°) with concave valleys between successive peaks, as is illustrated with the riblets R', r' in Fig. 2. Triangular riblets separated by narrow flat valleys can also be used. Furthermore, while Fig. 1 shows both the large and small riblets with the same base widths to give relatively sharp isosceles triangular profiles, it may be preferred to increase the base widths to about twice the heights of the respective riblets this is particularly relevant to cusp-shaped profiles shown in Fig. 2.

The preferred sizes and dimensional relationships of the riblets may be expressed in the non-dimensional form of so-called "law of the wall" variables in which actual distance values are multiplied by a "wall unit"
scalar quantity defined as:

$$\frac{\sqrt{\tau/\rho}}{\nu}$$

where
$\tau$    is the wall shear stress,
$\rho$    is the fluid density, and
$\nu$    is the fluid kinematic viscosity.

In the example, the smaller riblets r have a non-dimensionalised height $h^+$ of 15 units and larger riblets R have a height $h_l$ of 25 units. The width $w^+$ of each of the riblets is 7.5 units giving a pitch $s_l^+$ of 15 units for the pattern repeat.

Because of the presence of the smaller riblets r, a virtual surface is established for the turbulent boundary layer flow above the wall surface itself. The influence of the riblets r may be sufficient to set this virtual surface some three-quarters of their height above the wall surface, so that the effective height ($h_{le}^+$) of the larger riblets R, i.e. their height above the virtual surface, is therefore approximately 13 units, but the larger riblets add their own influence in the region above this so that the virtual surface is displaced further out.

Many variations of the sizes and profiles of the riblets are possible within the scope of the invention. The ratio h:s is preferably not substantially less than 1:2 nor substantially greater than 2:1. Within this range the aspect ratio (height:base width) can be higher especially for the large riblets. As far as concerns sizes, the following are the preferred size ranges in non-dimensional wall units for low speed flow:
for the smaller riblets r,

$2 \leq h^+ \leq 20$; preferably $5 \leq h^+ \leq 15$

for the larger riblets R,

$8 \leq h_{le}^+ \leq 45$; preferably $15 \leq h_{le}^+ \leq 35$

for the pattern repeat pitch,

$6 \leq s_l^+ \leq 50$; preferably $20 \leq s_l^+ \leq 40$.

Variations within the ranges specified may be made independently for each parameter but of course the larger riblets must project above the smaller riblets and a minimum projection of 3 wall units is required for their effects to be noticeable.

If a more extended pattern of riblets is used, the pattern repeat pitch will be increased while maintaining substantially the same base widths for the individual riblets. With riblets of three different heights, i.e. riblets $r_i$ of an intermediate height being interposed between higher and lower riblets in the manner illustrated in Fig. 3, the pattern repeat pitch is doubled. This is also the case for the example shown in Fig. 4 where the heights of the riblets decrease to a minimum in a region centrally positioned between the higher riblets. The profiles of the different height riblets may be different.

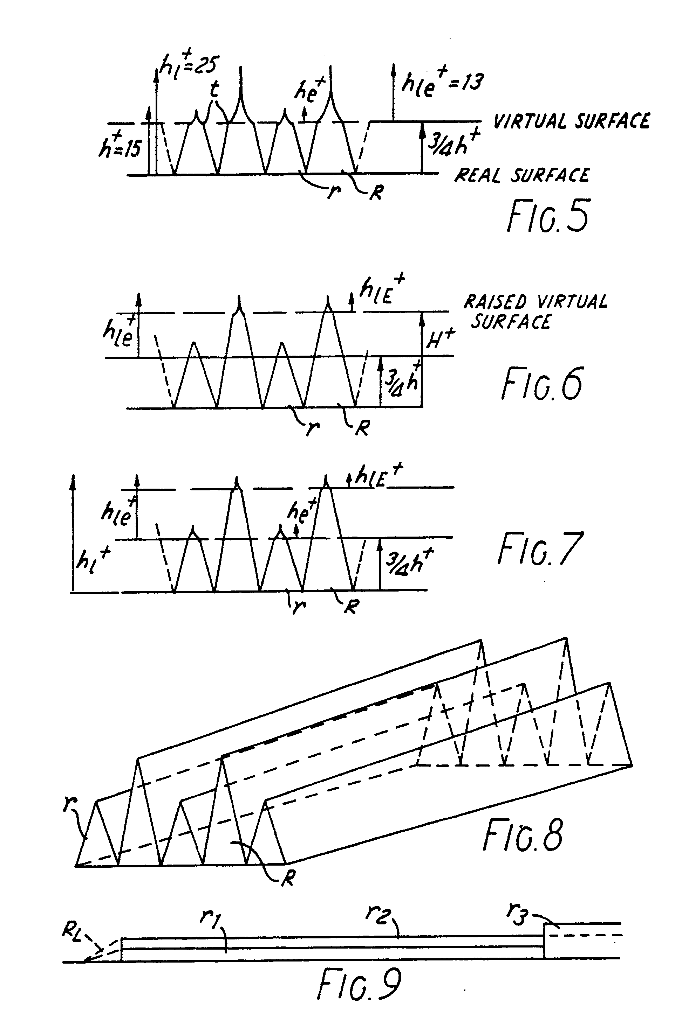

Figs. 5 to 7 illustrate further wall surface riblet patterns within the scope of the invention and having modified riblet profiles. In Fig. 5, a virtual wall surface is established at ¾ the height of the smaller riblets r in a pattern of alternating riblets of two different heights. The pattern pitch is 15 wall units, which is therefore the pitch ($s^+$, $s_i^+$) of both the smaller and larger riblets. The height of the smaller riblets is 15 wall units and that of the higher riblets R is 25 wall units; above the virtual wall surface they have a height ($h_{le}^+$) 13 units for the larger riblets and ($h_e^+$) 3 units for the smaller riblets. From the point of transition t the side faces of the riblets extend upwards with the sharp-peaked concave profiles already described while below the virtual wall surface they form deep-sided V-grooves.

If the presence of the larger riblets has the effects of taking the virtual wall surface higher the smaller riblets may lie entirely below the virtual surface. Fig. 6 illustrates a modification of the example in Fig. 5 in which this occurs and it shows that in addition to the ¾$h^+$ displacement of the wall surface produced by the smaller riblets, the larger riblets may induce a further displacement of ¾$h_{le}^+$ so that the virtual wall surface is at a height of approximately (¾$h^+$ + ¾$h_{le}^+$). The height of the smaller riblets being less than this they therefore have a completely planar profile, while side faces of the larger riblets are given their concave form over their effective height ($h_{lE}^+$) from the raised virtual wall surface.

It may be found, however, that a riblet pattern in which the height changes between successive riblets produces a similarly undulating virtual wall surface, especially if the pattern consists of more than two riblets. This can be accommodated by a configuration such as is shown in Fig. 7. Here it is assumed that the virtual wall surface height for the smaller riblets r corresponds to that in the example of Fig. 5, whereas for the larger riblets R it corresponds to that in Fig. 6. The point of inflection of the smaller riblets, i.e. their intersection with the virtual surface, is at ¾$h^+$ above the real surface, i.e. the base line of the pattern of riblets, and for the larger riblets the point of inflection is at approximately (¾$h^+$ + ¾$h_{le}^+$) above the real surface. The portion of the smaller riblets having a concave profile thus extends over a height ¼$h_i^+$ while the concave profile of the larger riblets extends over a height ¼($h_i^+$ - ¾$h^+$).

In the riblet patterns of Figs. 5 to 7, to perform their functions effectively the concave faces should form relatively sharp-edged peaks.

It will be appreciated that the effects described can be achieved, at least in substance, with modified forms of the inclined side faces shown. In particular, it may be desirable for practical reasons to blunt the points of inflection or the peaks of the riblet faces; also, these faces may comprise straight and/or curved portions both below and above the virtual wall surface without unduly changing the general character of the profiles required for the functions described. Furthermore, the peaks of the larger riblets may be flattened or rounded to reduce their inherent drag without affecting their function.

In all cases, for reducing wetted area it may also be possible to have short spanwise-extending gaps (less than the boundary layer thickness $\delta$ in the streamwise direction) between riblet areas (themselves greater than $2\delta$ in streamwise length) without sacrificing the advantages offered by the riblets.

It is also possible to employ either or both of the configurations that are the subjects of our two simultaneously filed patent applications, EP-A-0246914 and EP-A-0246916 in combination with that of this patent application. With regard to the streamwise riblet height increase that is the characteristic of EP-A-0246916 in its application to the different height riblets of the present application the increase can be continuous, as shown in Fig. 8, or stepped, as shown in Fig. 9. Since the self-limiting effect and progressive reduction of wall shear stress with development length that is countered by the height increase will first render the smallest riblets progressively inoperative, stepped height increases can be provided in a staggered manner; for example, Fig. 9 illustrates how, with a spanwise pattern of riblets $r_1$, $r_2$ of two different heights, the smaller riblets $r_1$ can be succeeded by a third series of riblets $r_3$ higher than the previously larger riblets $r_2$, and if a further stage is required the latter can be succeeded by a fourth still larger series, so that at each station in the direction of the stream the pattern is always composed of riblets o two different heights. Fig. 9 also indicates at $R_L$ how, at the leading edge of the riblet pattern the riblets can be faired into the wall surface to avoid a drag increase due to the flow meeting a bluff leading face. When there is a progressive stepped increase of the height of the riblets, as described above, the leading edge of each step may be faired similarly, although this is not illustrated.

The riblet dimensions that have been referred to above appear appropriate from the results carried out at relatively low free-stream velocities (U) and for Mach numbers (M) below about 0.3. However, it has been found that modification of the dimensions, in particular the riblet heights, is desirable for higher velocities and Mach Nos. It would appear that the streamwise length of the projections has a significant influence on the optimum dimensions especially at Mach Nos. greater than about 0.4M. Wind tunnel tests with uniform arrays of single-height V-groove riblets having a streamwise length of about 1 metre exemplify the change of dimensions in terms of wall units that is required to give optimum results at higher velocities. The following table, giving the riblet dimensions at the leading edge of the riblets, puts the data from these tests (3), (4), (5) at Mach Nos. in the range of 0.4-0.9M in context with previous low speed results (1), (2) in the range of 0.1M:

## Riblet height/span

| | $h^+, s^+$ wall units | $R_{eL}$ |
|---|---|---|
| (1) | 13 | $0.8 \times 10^6$ |
| (2) | 15 | $3 \times 10^6$ |
| (3) | 17 | $5 \times 10^6$ |
| (4) | 20 | $10 \times 10^6$ |
| (5) | 25 | $15 \times 10^6$ |

$R_{eL}$ being the length Reynolds No $= \frac{UL}{\nu}$ , L being the length of the riblets.

These results indicate that for optimum effect, at the leading edge of the riblets an increase of height in wall units of some 50% is required for a ten-fold increase of $R_{eL}$ relative to the low speed riblet height at $R_{eL} = 1 \times 10^5$.

The factors that determine the optimum are many and complex. The form of the underlying body, which may have streamwise and/or spanwise curvatures or discontinuities, and the possibility of non-uniform U values over the extent of a riblet array introduce further influences and an empirical evaluation of the optimum riblet dimensions may be necessary. For general purposes however, if the compensation of $R_{eL}$ is obtained by increasing the leading edge heights of the riblets, and possibly also their spacing, it is suggested that in relation to the lower speed values given in the discussion of the illustrated examples above, an appropriate scaling factor of the leading edge height of the riblets in wall units in relation to $R_{eL}$ ($h^+ : R_{eL}$) should be in the range 1:20 to 1:6. It is also desirable to scale the increase of the riblet dimensions along the length of the array irrespective of $R_{eL}$, as is discussed in more detail in our further patent application, EP-A-0246916, filed simultaneously herewith.

The invention is generally applicable to the wall surfaces of bodies in which a reduction of skin friction is sought. It may thus provide a means of reducing drag on the external surfaces of vehicles, including aircraft, land vehicles and watercraft. It can also be used in machines, e.g. the blading, both rotating and stationary, of turbo-machines, and for the internal surfaces of pipes and conduits. It will be understood that the invention includes the possibilities of forming the surface projections integrally with the bodies concerned and also of providing surface elements, e.g. as sheets or tapes, having the projections, for application to bodies to provide the required surface configurations thereon.

## DESCRIPTION FOR DE, FR, GB

This invention is concerned with the modification of turbulent boundary layer flows over aerodynamic and hydrodynamic surfaces.

There have been many investigations in recent years of the effects that small-geometry surface configurations can have on turbulent boundary layers. Particular attention has been paid to the provision of so-called riblet surfaces in which an array of small longitudinal ribs extend over the turbulent boundary layer region of a surface in the direction of fluid flow over the surface, and experimental results indicate that net or surface drag reductions of up to about 7% can be achieved.

In a paper "Drag Characteristics of V-Groove and Transverse Curvature Riblets" (presented by M.J. Walsh at the Symposium on Viscous Drag Reduction, Dallas, Texas, November 7-8, 1979) reference is made to an early investigation (1966) by Liu, Kline, and Johnston in which drag reductions of 3-4% were obtained by reducing the turbulent bursting rate (i.e. the rate of break-up of the low speed longitudinal vortices or "streaks" that are characteristically formed in a turbulent boundary layer flow close to a wall) by employing rectangular fins. Walsh's paper reports the investigation of a number of alternative rib profiles and states that he was able to obtain a maximum drag reduction of 7% using V-groove riblets, this representing substantially the greatest reduction of skin friction drag that experimenters have been able to obtain up to the present.

The drag reduction may be associated with the ability of the riblets to limit random spanwise movements of the streaks, as has been suggested by a number of sources, e.g. R.E. Falco (AIAA-83-0377, AIAA 21st Aerospace Sciences Meeting, January 10-13 1983, Reno, Nevada). Johansen and Smith (AIAA-85-0547, AIAA-Shear Flow Control Conference, March 12-14, 1985, Boulder, Colorado) have shown that cylindrical riblets of a smaller height than the V-groove riblets with which Walsh obtained his optimum results, have the effect of anchoring and/or creating sites of low-speed streaks in a limited region above the wall surface, but their experiments also showed drag increases of 3% to 8%. More recently, S.P. Wilkinson (abstract of paper read a "Drag Reduction and Boundary Layer Control Symposium", 22-25 October 1985 at the National Academy of Sciences, Washington D.C.) has attempted to follow Johansen and Smith by using blade riblets to anchor or create low-speed streaks by the use of riblets and then use V-groove riblets between the streak anchors to control bursting, but it is not yet reported whether a net drag reduction has been achieved thereby.

The results reported from these and other previous investigations all show the effect of riblets is rather limited, and that has led to the search for alternative solutions.

It has been proposed (U.S. patent application 686959 of M.J. Walsh et al - NASA Case LAR-13286-1) to reduce skin friction more effectively by providing a riblet surface with superimposed large-eddy break-up devices (LEBU's) as manipulators for the outer region of the boundary layer but such an arrangement adds considerable complexity and is susceptible to wear and especially accidental damage. In another proposal ("On the Drag Reduction of the Shark Skin", Bechert, Hoppe and Reif, AIAA-85-0546) it has been suggested that it may be appropriate to use so-called vortex generator surfaces which are configured so as to produce tangential mixing using local flow conditions over a ridge-pattern structure analogous to the configuration of scales on a shark's skin. It is claimed that this could lead to greater drag reduction, but it would also be inherently complicated and difficult to build up a simulation of the scaly surface that the investigators have concluded is responsible for the low drag characteristic.

In contrast to these attempts to reduce skin friction by rather complex means, riblet surfaces are less susceptible to damage and they can be formed relatively straightforwardly, e.g. by machining or pressing or by the application of a preformed, e.g. extruded layer. It would clearly be preferable to employ such surfaces if they were able to give greater reductions of skin friction drag.

In EP-A-0205289, a wide variety of possible different riblet configurations are disclosed, including the concept that the riblets could alternate in height in spanwise series across the surface to which they are applied. However, the benefits to be obtained from such constructions are not disclosed and no guidance is given as to the relative heights of the taller and shorter riblets.

The mechanisms by which the riblets on such surfaces work is not yet fully understood and it is perhaps significant that different researchers have published conflicting data about the variation of net reduction of skin friction with rib length. If it can be postulated that riblets bring a turbulent boundary layer flow closer to laminar flow conditions their efficiency is low, bearing in mind that in equivalent turbulent and laminar flow regions the skin friction drag with laminar flow would be 80% less than that with turbulent flow. If a more significant proportion of this potential improvement could be achieved, the use of riblet surfaces could offer marked advantages over the complex drag reduction systems described above.

According to the present invention, there is provided an aerodynamic or hydrodynamic wall surface which is provided with a series of elongate projections extending in the direction of fluid flow relative to the surface for modification of a turbulent boundary layer on said surface, said projections being disposed in a repeated spanwise pattern in which the adjacent projections in each pattern repeat project to different heights and characterised in that said heights differ by at least 3 wall units, wherein a wall unit is a dimensionless value comprising an actual distance value multiplied by a scalar quantity expressing the variation of wall shear stress with fluid density and viscosity.

The projections preferably form a substantially continuous spanwise array of riblets. It is also preferred to form the projections with sharp-peaked profiles.

In the simplest example, the repeated pattern consists of alternating higher and lower riblets. It is possible, however, to form a pattern of riblets of three, or even more than three, heights that will provide advantages over the known uniform height riblet surfaces. Such patterns are preferably symmetrical.

Considering the example of alternating higher and lower riblets, the lower riblets function to inhibit turbulent eddy motions in the boundary layer from penetrating to all parts of the wall surface, in particular deep into their grooves, resulting in a displacement of the turbulent motion away from the wall with the establishment of a virtual surface some 3/4 of their height above the wall. The alternating higher riblets are so scaled in relation to the lower riblets and the boundary layer thickness that they have the function of extending this effect to its limit; because of their greater scale their action is complementary to that of the lower riblets and the turbulent eddy motions are kept further from the wall surface.

If the pattern consisted of riblets of three different heights, this effect is taken a stage further, but the additional improvement would now be less than the improvement already given by a pattern of ribs of two different heights. The use of a pattern with ribs of substantially more than three different heights will not generally give sufficient further improvement to justify its complexity.

It appears to be the case that riblets of the kind already known function wholly or primarily in a passive manner and do not have any significant influence on the evolution of the eddies themselves. This may also be true of the wall surface configurations of the present invention, but a greater reduction of skin friction can be obtained because, in addition to providing their own contribution the lower riblets modify the deep boundary layer region so that the higher riblets can be similarly operative at a greater distance from the wall surface.

Depending upon their profile, the riblets may also have some effect in inhibiting the spanwise gradients associated with the formation of longitudinal vortices or "streaks" in the boundary layer and initiating secondary, smaller-scale longitudinal eddies. However, in view of the relatively small drag reductions obtained in the published investigations of riblet surfaces, this would seem not to be a major effect, and the improvement offered by the present invention does not rely on the riblets having such an influence.

The relatively low efficiency of the known riblet surfaces may also be because their performance tends to be self-limiting. The displacement of turbulent eddy motions away from the wall surface by the riblets tends to reduce the wall shear stress, which has a scaling influence reducing the effective height of the riblets, and therefore curbing their efficiency. In the present invention, the higher riblets are present to reinforce the action of the lower riblets and so force the turbulent eddy motions further from the wall surface. At the same time this automatically compensates for any loss of efficiency of the smaller riblets. Another secondary benefit is also obtainable because there is some degree of progressive reduction of with the stream development length (i.e. the streamwise distance along the wall surface) that may be significant in the transition region and the early part of the turbulent boundary layer. The smaller riblets of a suitable height for an early region of the turbulent boundary layer will therefore progressively show less effect along their length, but the higher riblets now present extend the effective area of the ribbing to a greater stream development length.

In a preferred configuration according to the present invention, at least the higher riblets have side faces that are inclined at an angle that varies over the height of the projections, each said side face having an intermediate region at a lesser steepness than the adjacent regions above and below said region and forming the lower part of a concave profile peak of the associated projection. In the simplest case, in which the pattern of projections consists of alternating higher and lower projections, smaller and higher projections can be arranged to displace turbulent eddy motions in the boundary layer away from the wall surface. Whereas the smaller projections by themselves would not be able to establish a virtual surface above the wall surface by more than about three-quarters of their height, the higher projections can be so scaled in relation to the smaller projections that they have the function of extending this effect to its limit.

For best effect the transition to the concave-sided peaks should be positioned at or close to the virtual wall height established by the projections. The region below the transition preferably has substantially planar faces so as to form a series of steep-sided V-grooves between the projections in their lowest reaches. These can act in the manner already described to displace the turbulent motion away from the wall surface. The longitudinal vortices displaced above the virtual wall surface are then controlled by the concave peaks projecting into this region which, by virtue of their different profile, can act more strongly on the vortices. If the enhanced displacement of the virtual wall surface resulting from the combination of projection heights puts that virtual surface above the height of the smallest projections, no benefit is achieved by modifying their side faces. To the extent that any of the smaller projections extends above the virtual wall position, it is an advantage that their side faces be given a varied inclination similarly, with the transition substantially at the height of the virtual wall position. This may result in a change of inclination occurring at a particular height above the actual wall surface that is the origin of the projections, but in particular cases the pattern of projections may produce a virtual wall surface height that varies spanwise with the projection pattern, and the positions of the changes of inclination on the individual projections can then follow those changes of height.

The transition to the concave profile may be substantially sharp-edged, but it is also possible to have a radiussed or chamfered transition. The concave faces are preferably continuously curved to a relatively sharp-edged tip but it is also possible to build them up from a group of straight and/or curved sections and for convenience the tip itself may be flattened or radiussed.

By way of example, reference will now be made to the accompanying drawings, in which:

Fig. 1 illustrates in schematic form a transverse cross-section through a wall surface formed in accordance with the invention, perpendicular to the flow direction over the surface, and

Figs. 2 to 9 illustrate a number of modifications that can be applied individually or in combination to the configuration in Fig. 1.

Referring to Fig. 1, the wall surface is shown with alternating higher riblets R and lower riblets r, this pattern being repeated spanwise and the riblets running in the stream direction over the surface in the turbulent boundary layer region, and preferably starting from the transition region of the flow over the surface. The pattern extending streamwise preferably continues over all the turbulent boundary layer area of the surface. It is not essential that the riblets be aligned precisely with the fluid stream and deviations of up to $10°$-$15°$ can be tolerated. The riblets are all shown with triangular profiles, but other profiles can be used, another preferred profile having a sharp-peaked from (apex included angle preferably not greater than about $20°$) with concave valleys between successive peaks, as is illustrated with the riblets R', r' in Fig. 2. Triangular riblets separated by narrow flat valleys can also be used. Furthermore, while Fig. 1 shows both the large and small riblets with the same base widths to give relatively sharp isosceles triangular profiles, it may be preferred to increase the base widths to about twice the heights of the respective riblets; this is particularly relevant to cusp-shaped profiles shown in Fig. 2.

The preferred sizes and dimensional relationships of the riblets may be expressed in the non-dimensional form of so-called "law of the wall" variables in which actual distance values are multiplied by a "wall unit" scalar quantity defined as:

$$\frac{\sqrt{\tau/\rho}}{\nu}$$

where

$\tau$  is the wall shear stress,
$\rho$  is the fluid density, and

$\nu$  is the fluid kinematic viscosity.

In the example, the smaller riblets r have a non-dimensionalised height $h^+$ of 15 units and larger riblets R have a height $h_l$ of 25 units. The width $w^+$ of each of the riblets is 7.5 units giving a pitch $S_l^+$ of 15 units for the pattern repeat.

Because of the presence of the smaller riblets r, a virtual surface is established for the turbulent boundary layer flow above the wall surface itself. The influence of the riblets r may be sufficient to set this virtual surface some three-quarters of their height above the wall surface, so that the effective height ($h_{le}^+$) of the larger riblets R, i.e. their height above the virtual surface, is therefore approximately 13 units, but the larger riblets add their own influence in the region above this so that the virtual surface is displaced further out.

Many variations of the sizes and profiles of the riblets are possible within the scope of the invention. The ratio h:s is preferably not substantially less than 1:2 nor substantially greater than 2:1. Within this range the aspect ratio (height:base width) can be higher especially for the large riblets. As far as concerns sizes, the following are the preferred size ranges in non-dimensional wall units for low speed flow:

for the smaller riblets r,

$$2 \leq h^+ \leq 20; \text{ preferably } 5 \leq h^+ \leq 15$$

for the larger riblets R,

$$8 \leq h_{le}^+ \leq 45; \text{ preferably } 15 \leq h_{le}^+ \leq 35$$

for the pattern repeat pitch,

$$6 \leq s_l^+ \leq 50; \text{ preferably } 20 \leq s_l^+ \leq 40.$$

Variations within the ranges specified may be made independently for each parameter but of course the larger riblets must project above the smaller riblets and a minimum projection of 3 wall units is required for their effects to be noticeable.

If a more extended pattern of riblets is used, the pattern repeat pitch will be increased while maintaining substantially the same base widths for the individual riblets. With riblets of three different heights, i.e. riblets $r_i$ of an intermediate height being interposed between higher and lower riblets in the manner illustrated in Fig. 3, the pattern repeat pitch is doubled. This is also the case for the example shown in Fig. 4 where the heights of the riblets decrease to a minimum in a region centrally positioned between the higher riblets. The profiles of the different height riblets may be different.

Figs. 5 to 7 illustrate further wall surface riblet patterns within the scope of the invention and having

ing modified riblet profiles. In Fig. 5, a virtual wall surface is established at ¾ the height of the smaller riblets r in a pattern of alternating riblets of two different heights. The pattern pitch is 15 wall units, which is therefore the pitch ($s^+$, $s_l^+$) of both the smaller and larger riblets. The height of the smaller riblets is 15 wall units and that of the higher riblets R is 25 wall units; above the virtual wall surface they have a height ($h_{le}^+$) 13 units for the larger riblets and ($h_e^+$) 3 units for the smaller riblets. From the point of transition t the side faces of the riblets extend upwards with the sharp-peaked concave profiles already described while below the virtual wall surface they form deep-sided V-grooves.

If the presence of the larger riblets has the effect of taking the virtual wall surface higher the smaller riblets may lie entirely below the virtual surface. Fig. 6 illustrates a modification of the example in Fig. 5 in which this occurs and it shows that in addition to the $¾h^+$ displacement of the wall surface produced by the smaller riblets, the larger riblets may induce a further displacement of $¾h_{le}^+$ so that the virtual wall surface is at a height of approximately ($¾h^+ + ¾h_{le}^+$). The height of the smaller riblets being less than this they therefore have a completely planar profile, while side faces of the larger riblets are given their concave form over their effective height ($h_{lE}^+$) from the raised virtual wall surface.

It may be found, however, that a riblet pattern in which the height changes between successive riblets produces a similarly undulating virtual wall surface, especially if the pattern consists of more than two riblets. This can be accommodated by a configuration such as is shown in Fig. 7. Here it is assumed that the virtual wall surface height for the smaller riblets r corresponds to that in the example of Fig. 5, whereas for the larger riblets R it corresponds to that in Fig. 6. The point of inflection of the smaller riblets, i.e. their intersection with the virtual surface, is at $¾h^+$ above the real surface, i.e. the base line of the pattern of riblets, and for the larger riblets the point of inflection is at approximately ($¾h^+ + ¾h_{le}^+$) above the real surface. The portion of the smaller riblets having a concave profile thus extends over a height $\frac{1}{4}h_l^+$ while the concave profile of the larger riblets extends over a height $\frac{1}{4}(h_l^+ - ¾h^+)$.

In the riblet patterns of Figs. 5 to 7, to perform their functions effectively the concave faces should form relatively sharp-edged peaks.

It will be appreciated that the effects described can be achieved, at least in substance, with modified forms of the inclined side faces shown. In particular, it may be desirable for practical reasons to blunt the points of inflection or the peaks of the riblet faces; also, these faces may comprise straight and/or curved portions both below and above the virtual wall surface without unduly changing the general character of the profiles required for the functions described. Furthermore, the peaks of the larger riblets may be flattened or rounded to reduce their inherent drag without affecting their function.

In all cases, for reducing wetted area it may also be possible to have short spanwise-extending gaps (less than the boundary layer thickness $\delta$ in the streamwise direction) between riblet areas (themselves greater than $2\delta$ in streamwise length) without sacrificing the advantages offered by the riblets.

It is also possible to employ either or both of the configurations that are the subjects of our two simultaneously filed patent applications, EP-A-0246914 and EP-A-0246916 in combination with that of this patent application. With regard to the streamwise riblet height increase that is the characteristic of EP-A-0246916 in its application to the different height riblets of the present application the increase can be continuous, as shown in Fig. 8, or stepped, as shown in Fig. 9. Since the self-limiting effect and progressive reduction of wall shear stress with development length that is countered by the height increase will first render the smallest riblets progressively inoperative, stepped height increases can be provided in a staggered manner; for example, Fig. 9 illustrates how, with a spanwise pattern of riblets $r_1$, $r_2$ of two different heights, the smaller riblets $r_1$ can be succeeded by a third series of riblets $r_3$ higher than the previously larger riblets $r_2$, and if a further stage is required the latter can be succeeded by a fourth still larger series, so that at each station in the direction of the stream the pattern is always composed of riblets of two different heights. Fig. 9 also indicates at $R_L$ how, at the leading edge of the riblet pattern the riblets can be faired into the wall surface to avoid a drag increase due to the flow meeting a bluff leading face. When there is a progressive stepped increase of the height of the riblets, as described above, the leading edge of each step may be faired similarly, although this is not illustrated.

The riblet dimensions that have been referred to above appear appropriate from the results carried out at relatively low free-stream velocities (U) and for Mach numbers (M) below about 0.3. However, it has been found that modification of the dimensions, in particular the riblet heights, is desirable for higher velocities and Mach Nos. It would appear that the streamwise length of the projections has a significant influence on the optimum dimensions especially at Mach Nos. greater than about 0.4M. Wind tunnel tests with uniform arrays of single-height V-groove riblets having a streamwise length of about 1 metre exemplify the change of dimensions in terms of wall units that is required to give optimum results at higher velocities. The following table, giving the riblet dimensions at the leading edge of the riblets, puts the data from these tests (3), (4), (5) at Mach Nos. in the range of 0.4-0.9M in context with previous low speed results (1), (2) in the range of 0.1M:

## Riblet height/span

| $h^+$, $s^+$ wall units | $R_{eL}$ |
|---|---|
| (1) 13 | $0.8 \times 10^6$ |
| (2) 15 | $3 \times 10^6$ |
| (3) 17 | $5 \times 10^6$ |
| (4) 20 | $10 \times 10^6$ |
| (5) 25 | $15 \times 10^6$ |

$R_{eL}$ being the length Reynolds No $= \frac{UL}{\nu}$, L being the length of the riblets.

These results indicate that for optimum effect, at the leading edge of the riblets an increase of height in wall units of some 50% is required for a ten-fold increase of $R_{eL}$ relative to the low speed riblet height at $R_{eL} = 1 \times 10^6$.

The factors that determine the optimum are many and complex. The form of the underlying body, which may have streamwise and/or spanwise curvatures or discontinuities, and the possibility of non-uniform U values over the extent of a riblet array introduce further influences and an empirical evaluation of the optimum riblet dimensions may be necessary. For general purposes however, if the compensation of $R_{eL}$ is obtained by increasing the leading edge heights of the riblets, and possibly also their spacing, it is suggested that in relation to the lower speed values given in the discussion of the illustrated examples above, an appropriate scaling factor of the leading edge height of the riblets in wall units in relation to $R_{eL}$ ($h^+$ : $R_{eL}$) should be in the range 1:20 to 1:6. It is also desirable to scale the increase of the riblet dimensions along the length of the array irrespective of $R_{eL}$, as is discussed in more detail in our further patent application, EP-A-0246916, filed simultaneously herewith.

The invention is generally applicable to the wall surfaces of bodies in which a reduction of skin friction is sought. It may thus provide a means of reducing drag on the external surfaces of vehicles, including aircraft, land vehicles and watercraft. It can also be used in machines, e.g. the blading, both rotating and stationary, of turbo-machines, and for the internal surfaces of pipes and conduits. It will be understood that the invention includes the possibilities of forming the surface projections integrally with the bodies concerned and also of providing surface elements, e.g. as sheets or tapes, having the projections, for application to bodies to provide the required surface configurations thereon.

## Claims
### Claims for the following Contracting State : SE

1. An aerodynamic or hydrodynamic wall surface which is provided with a series of elongate projections extending in the direction of fluid flow relative to the surface for modification of a turbulent boundary layer on said surface, characterised in that the said projections are disposed in a repeated spanwise pattern in which the adjacent projections in each pattern repeat project to different heights.

2. A surface according to claim 1 wherein said heights differ by at least 3 wall units, wherein a wall unit is a dimensionless value comprising an actual distance value multiplied by a scalar quantity expressing the variation of wall shear stress with fluid density and viscosity.

3. A surface according to claim 1 or claim 2 wherein the pattern consists of individual projections of two different heights in alternation.

4. A surface according to claim 1 or claim 2 wherein the pattern consists of a symmetrical arrangement of projections of three different heights.

5. A surface according to any one of the preceding claims wherein the projections form a substantially continuous spanwise array.

6. A surface according to any one of the preceding claims wherein the projections extend streamwise at least over the length of the turbulent boundary layer region of the surface.

7. A surface according to any one of the preceding claims wherein at least one projection of the pattern is sharp-peaked.

8. A surface according to claim 7 wherein the sharp-peaked projections have a V-form profile.

9. A surface according to claim 7 wherein the sharp-peaked projections have a profile which comprises concavely curved valleys between adjacent projections.

10. A surface according to any one of the preceding claims wherein flat-bottomed valleys are provided between at least some of the projections.

11. A surface according to any one of the preceding claims wherein the effective height of each larger height projection relative to a virtual wall position established by the smaller projections immediately adjacent to it is at least 3 wall units, wherein a wall unit is a dimensionless value comprising an actual distance value multiplied by a scalar quantity expressing the variation of wall shear stress with fluid density and viscosity.

12. A surface according to any one of the preceding claims wherein the heights of the projections increase in the direction of fluid flow.

13. A surface according to claim 12 wherein said increase of height is stepped, and wherein a larger height projection of the pattern preceding a step becomes the smaller height projection of the pattern following the step.

14. A surface according to any one of the preceding claims wherein at least the larger height projections have side faces that are inclined at an angle that varies over the height of the projections, each said side face having an intermediate region at a lesser steepness than the adjacent regions above and below said regions and forming the lower part of a concave profile peak of the associated projection.

15. A surface according to claim 14 wherein all the projections extending above a virtual wall height have side walls of said varying inclination, with said intermediate region positioned substantially at the virtual wall height, said virtual wall height being the distance by which turbulence in the boundary layer is displaced away from the wall surface by said projections.

16. A surface according to any one of the preceding claims wherein there is at least one gap between lengths of said projections, each gap width in the direction of fluid flow being not greater than the boundary layer thickness ($\delta$).

17. A body having an aerodynamic or hydrodynamic wall surface provided with a series of projections according to any one of the preceding claims.

**Claims for the following Contracting States : GB, FR, DE**

1. An aerodynamic or hydrodynamic wall surface which is provided with a series of elongate projections extending in the direction of fluid flow relative to the surface for modification of a turbulent boundary layer on said surface, said projections being disposed in a repeated spanwise pattern in which the adjacent projections in each pattern repeat project to different heights and characterised in that said heights differ by at least 3 wall units, wherein a wall unit is a dimensionless value comprising an actual distance value multiplied by a scalar quantity expressing the variation of wall shear stress with fluid density and viscosity.

2. A surface according to claim 1 wherein the pattern consists of individual projections of two different heights in alternation.

3. A surface according to claim 1 wherein the pattern consists of a symmetrical arrangement of projections of three different heights.

4. A surface according to any one of the preceding claims wherein the projections form a substantially continuous spanwise array.

5. A surface according to any one of the preceding claims wherein the projections extend streamwise at least over the length of the turbulent boundary layer region of the surface.

6. A surface according to any one of the preceding claims wherein at least one projection of the pattern is sharp-peaked.

7. A surface according to claim 6 wherein the sharp-peaked projections have a V-form profile.

8. A surface according to claim 6 wherein the sharp-peaked projections have a profile which comprises concavely curved valleys between adjacent projections.

9. A surface according to any one of the preceding claims wherein flat-bottomed valleys are provided between at least some of the projections.

10. A surface according to any one of the preceding claims wherein the effective height of each larger height projection relative to a virtual wall position established by the smaller projections immediately adjacent to it is at least 3 wall units.

11. A surface according to any one of the preceding claims wherein the heights of the projections increase in the direction of fluid flow.

12. A surface according to claim 11 wherein said increase of height is stepped, and wherein a larger height projection of the pattern preceding a step becomes the smaller height projection of the pattern following the step.

13. A surface according to any one of the preceding claims wherein at least the larger height projections have side faces that are inclined at an angle that varies over the height of the projections, each said side face having an intermediate region at a lesser steepness than the adjacent regions above and below said intermediate region and forming the lower part of a concave profile peak of the associated projection.

14. A surface according to claim 13 wherein all the projections extending above a virtual wall height have side walls of said varying inclination, with said intermediate region positioned substantially at the virtual wall height, said virtual wall height being the distance by which turbulence in the boundary layer is displaced away from the wall surface by said projections.

15. A surface according to any one of the preceding claims wherein there is at least one gap between lengths of said projections, each gap width in the direction of fluid flow being not greater than the boundary layer thickness ($\delta$).

16. A body having an aerodynamic or hydrodynamic wall suface provided with a series of projections according to any one of the preceding claims.

**Revendications**
**Revendications pour les Etats contractants suivants : GB, FR, DE**

1. Surface de paroi aérodynamique ou hydrodynamique dotée d'une série de saillies allongées s'étendant dans la direction de l'écoulement fluide par rapport à la surface, pour modifier une couche limite turbulente sur ladite surface, lesdites saillies étant disposées selon un motif répété transversalement dans lequel les saillies adjacentes dans chaque répétition de motifs saillent à des hauteurs différentes, et caractérisée en ce que lesdites hauteurs diffèrent d'au moins 3 unités de paroi, où une unité de paroi est une valeur sans dimension comprenant une valeur de distance réelle multipliée par une quantité scalaire exprimant la variation de la contrainte de cisaillement de paroi avec la densité et la viscosité fluides.

2. Surface selon la revendication 1, dans laquelle le motif consiste en des saillies individuelles de deux hauteurs différentes alternées.

3. Surface selon la revendication 1, dans laquelle le motif consiste en une disposition symétrique de saillies de trois hauteurs différentes.

4. Surface selon l'une quelconque des revendications précédentes, dans laquelle les saillies forment un réseau transversal sensiblement continu.

5. Surface selon l'une quelconque des revendications précédentes, dans laquelle les saillies s'étendent dans le sens du courant, au moins sur la longueur d'une région de couche limite turbulente de la surface.

6. Surface selon l'une quelconque des revendications précédentes, dans laquelle au moins une saillie du motif a une crête pointue.

7. Surface selon la revendication 6, dans laquelle les saillies à crêtes pointues ont un profil en forme de V.

8. Surface selon la revendication 6, dans laquelle les saillies à crêtes pointues ont un profit qui comprend des sillons incurvés de façon concave entre les saillies adjacentes.

9. Surface selon l'une quelconque des revendications précédentes, dans laquelle des sillons à fond plat sont réalisés entre au moins certaines des saillies.

10. Surface selon l'une quelconque des revendications précédentes, dans laquelle la hauteur effective de chaque saillie de hauteur maximale, par rapport à une position virtuelle de paroi définie par les saillies plus petites immédiatement adjacentes à celle-ci, est d'au moins 3 unités de paroi.

11. Surface selon l'une quelconque des revendications précédentes, dans laquelle les hauteurs des saillies s'accroissent dans la direction de l'écoulement fluide.

**12.** Surface selon la revendication 11, dans laquelle ledit accroissement de hauteurs est étagé, et dans laquelle la saillie de hauteur maximale du motif avant un gradin devient la saillie de hauteur minimale du motif après le gradin.

**13.** Surface selon l'une quelconque des revendications précédentes, dans laquelle au moins les saillies de hauteur maximale ont des faces latérales qui sont inclinées d'un angle variant sur la hauteur des saillies, chacune desdites faces latérales ayant une région intermédiaire moins inclinée que les régions adjacentes au-dessus et au-dessous de ladite région intermédiaire, et formant la partie inférieure d'une crête à profil concave de la saillie associée.

**14.** Surface selon la revendication 13, dans laquelle toutes les saillies s'étendant au-dessus de la hauteur de paroi virtuelle ont des parois latérales ayant ladite inclinaison variable, ladite région intermédiaire étant positionnée sensiblement à la hauteur de paroi virtuelle, ladite hauteur de paroi virtuelle étant la distance dont la turbulence dans la couche limite est déplacée à partir de la surface de paroi par lesdites saillies.

**15.** Surface selon l'une quelconque des revendications précédentes, dans laquelle il y a au moins un espace entre des longueurs desdites saillies, chaque largeur d'espace dans la direction de l'écoulement fluide étant inférieure à l'épaisseur de la couche limite ($\delta$).

**16.** Corps ayant une surface de paroi aérodynamique ou hydrodynamique doté d'une série de saillies selon l'une quelconque des revendications précédentes.

**Revendications pour l'Etat contractant suivant : SE**

**1.** Surface de paroi aérodynamique ou hydrodynamique dotée d'une série de saillies allongées s'étendant dans la direction de l'écoulement fluide par rapport à la surface, pour modifier une couche limite turbulente sur ladite surface, caractérisée en ce que lesdites saillies sont disposées selon un motif répété transversalement dans lequel les saillies adjacentes dans chaque répétition de motifs saillent à des hauteurs différentes.

**2.** Surface selon la revendication 1, dans laquelle lesdites hauteurs diffèrent d'au moins 3 unités de paroi, où une unité de paroi est une valeur sans dimension comprenant une valeur de distance réelle multipliée par une quantité scalaire exprimant la variation de la contrainte de cisaillement de paroi avec la densité et la viscosité fluides.

**3.** Surface selon la revendication 1 ou la revendication 2, dans laquelle le motif consiste en des saillies individuelles de deux hauteurs différentes alternées.

**4.** Surface selon la revendication 1 ou la revendication 2, dans laquelle le motif consiste en une disposition symétrique de saillies de trois hauteurs différentes.

**5.** Surface selon l'une quelconque des revendications précédentes, dans laquelle les saillies forment un réseau transversal sensiblement continu.

**6.** Surface selon l'une quelconque des revendications précédentes, dans laquelle les saillies s'étendent dans le sens du courant, au moins sur la longueur d'une région de couche limite turbulente de la surface

**7.** Surface selon l'une quelconque des revendications précédentes, dans laquelle au moins une saillie du motif a une crête pointue.

**8.** Surface selon la revendication 7, dans laquelle les saillies à crêtes pointues ont un profil en forme de V.

**9.** Surface selon la revendication 7, dans laquelle les saillies à crêtes pointues ont un profil qui comprend des sillons incurvés de façon concave entre les saillies adjacentes.

**10.** Surface selon l'une quelconque des revendications précédentes, dans laquelle des sillons à fond plat sont réalisés entre au moins certaines des saillies.

**11.** Surface selon l'une quelconque des revendications précédentes, dans laquelle la hauteur effective de chaque saillie de hauteur maximale, par rapport à une position virtuelle de paroi définie par les saillies plus petites immédiatement adjacentes à celle-ci, est d'au moins 3 unités de paroi, où une unité de paroi est une valeur sans dimension comprenant une valeur de distance réelle multipliée par une quantité scalaire exprimant la variation de la contrainte de cisaillement de paroi avec la densité et la viscosité fluides

**12.** Surface selon l'une quelconque des revendications précédentes, dans laquelle les hauteurs des saillies s'accroissent dans la direction de l'écoulement fluide.

13. Surface selon la revendication 12, dans laquelle ledit accroissement de hauteurs est étagé, et dans laquelle la saillie de hauteur maximale du motif avant un gradin devient la saillie de hauteur minimale du motif après le gradin.

14. Surface selon l'une quelconque des revendications précédentes, dans laquelle au moins les saillies de hauteur maximale ont des faces latérales qui sont inclinées d'un angle variant sur la hauteur des saillies, chacune desdites faces latérales ayant une région intermédiaire moins inclinée que les régions adjacentes au-dessus et au-dessous de ladite région intermédiaire, et formant la partie inférieure d'une crête à profit concave de la saillie associée.

15. Surface selon la revendication 14, dans laquelle toutes les saillies s'étendant au-dessus de la hauteur de paroi virtuelle ont des parois latérales ayant ladite inclinaison variable, ladite région intermédiaire étant positionnée sensiblement à la hauteur de paroi virtuelle, ladite hauteur de paroi virtuelle étant la distance dont la turbulence dans la couche limite est déplace à partir de la surface de paroi par lesdites saillies.

16. Surface selon l'une quelconque des revendications précédentes, dans laquelle il y a au moins un espace entre des longueurs desdites saillies, chaque largeur d'espace dans la direction de l'écoulement fluide étant inférieure à l'épaisseur de la couche limite (δ).

17. Corps ayant une surface de paroi aérodynamique ou hydrodynamique doté d'une série de saillies selon l'une quelconque des revendications précédentes.

**Patentansprüche**
**Patentansprüche für folgende Vertragsstaaten : GB, FR, DE**

1. Aerodynamische oder hydrodynamische Wandoberfläche, die mit einer Reihe von langgestreckten Vorsprüngen versehen ist, welche in Richtung der Strömung relativ zur Oberfläche verlaufen, um eine turbulente Grenzschicht auf dieser Oberfläche zu modifizieren, wobei diese Vorsprünge in einem sich in Spannrichtung wiederholenden Muster angeordnet sind, bei welchem die benachbarten Vorsprünge bei jeder Musterwiederholung auf unterschiedliche Höhen vorstehen, dadurch gekennzeichnet, daß die Höhen sich um wenigstens drei Wandeinheiten unterscheiden, wobei eine Wandeinheit ein dimensionsloser Wert ist, der einem tatsächlichen Abstandswert multipliziert um eine skalare Größe entspricht, die die Veränderung der Wandscherbeanspruchung mit der Strömungsmitteldichte und - viskosität ausdrückt.

2. Oberfläche nach Anspruch 1, bei welcher das Muster aus individuellen Vorsprüngen mit zwei abwechselnden Höhen besteht.

3. Oberfläche nach Anspruch 1, bei welcher das Muster aus einer symmetrischen Anordnung von Vorsprüngen mit drei unterschiedlichen Höhen besteht.

4. Oberfläche nach einem der vorhergehenden Ansprüche, bei welcher die Vorsprünge eine im wesentlichen kontinuierliche, in Spannrichtung verlaufende Anordnung bilden.

5. Oberfläche nach einem der vorhergehenden Ansprüche, bei welcher die Vorsprünge sich in Strömungsrichtung wenigstens über die Länge des turbulenten Grenzschichtsbereichs der Oberfläche erstrecken.

6. Oberfläche nach einem der vorhergehenden Ansprüche, bei welcher wenigstens ein Vorsprung des Musters eine ausgeprägte Spitze aufweist.

7. Oberfläche nach Anspruch 6, bei welchem die ausgeprägte Spitze ein V-Form-Profil aufweist.

8. Oberfläche nach Anspruch 6, bei welcher die scharf ausgeprägten Vorsprünge ein Profil aufweisen, welches konkav gekrümmte Täler zwischen benachbarten Vorsprüngen besitzt.

9. Oberfläche nach einem der vorhergehenden Ansprüche, bei welcher am Boden flache Täler zwischen wenigstens einigen Vorsprüngen vorgesehen sind.

10. Oberfläche nach einem der vorhergehenden Ansprüche, bei welcher die effektive Höhe eines jeden Vorsprungs größerer Höhe relativ zu einer virtuellen Wandstellung, die durch die kleineren Vorsprünge unmittelbar benachbart gebildet ist, bei wenigstens drei Wandeinheiten liegt.

11. Oberfläche nach einem der vorhergehenden Ansprüche, bei welcher die Höhe der Vorsprünge in Richtung der Strömung ansteigt.

12. Oberfläche nach Anspruch 11, bei welcher das Ansteigen der Höhe stufenweise erfolgt und ein Vorsprung mit größerer Höhe des Musters, der vor einer Stufe liegt, der Vorsprung kleinerer Höhe des Musters wird, das der Stufe folgt.

13. Oberfläche nach einem der vorhergehenden Ansprüche, bei welcher wenigstens die Vorsprünge größerer Höhe Seitenflächen aufweisen, die unter einem Winkel geneigt sind, der sich über die Höhe der Vorsprünge ändert, wobei jede Seitenfläche einen Zwischenbereich mit einer geringeren Steilheit aufweist als benachbarte Bereiche über und unter dem Zwischenbereich und den Unterteil eines konkaven Profilextremwerts des zugeordneten Vorsprungs bildet.

14. Oberfläche nach Anspruch 13, bei welcher sämtliche Vorsprünge, die über eine virtuelle Wandhöhe vorstehen, Seitenwände mit der sich ändernden Steigung aufweisen, wobei der Zwischenbereich im wesentlichen in der virtuellen Wandhöhe liegt und die virtuelle Wandhöhe die Entfernung ist, um die die Turbulenz in der Grenzschicht von der Wandoberfläche durch die Vorsprünge versetzt wird.

15. Oberfläche nach einem der vorhergehenden Ansprüche, bei welcher wenigstens ein Spalt zwischen den Längen der Vorsprünge vorgesehen ist, wobei jede Spaltweite in Richtung der Strömung nicht größer ist als die Grenzschichtdicke ($\delta$).

16. Ein Körper mit einer aerodynamischen oder hydrodynamischen Wandoberfläche, die mit einer Reihe von Vorsprüngen gemäß einem der vorhergehenden Ansprüche ausgestattet ist.

**Patentansprüche für folgenden Vertragsstaat : SE**

1. Aerodynamische oder hydrodynamische Wandoberfläche, die mit einer Reihe von langgestreckten Vorsprüngen versehen ist, welche in Richtung der Strömung relativ zur Oberfläche verlaufen, um eine turbulente Grenzschicht auf dieser Oberfläche zu modifizieren, dadurch gekennzeichnet, daß diese Vorsprünge in einem sich in Spannrichtung wiederholenden Muster angeordnet sind, bei welchem die benachbarten Vorsprünge bei jeder Musterwiederholung auf unterschiedliche Höhen vorstehen.

2. Oberfläche nach Anspruch 1, bei welcher die Höhen sich um wenigstens drei Wandeinheiten unterscheiden, wobei eine Wandeinheit ein dimensionsloser Wert ist, der einem tatsächlichen Abstandswert multipliziert um eine skalare Größe entspricht, die die Veränderung der Wandscherbeanspruchung mit der Strömungsmitteldichte und Strömungsmittelviskosität ausdrückt.

3. Oberfläche nach Anspruch 1 oder 2, bei welcher das Muster aus individuellen Vorsprüngen mit zwei abwechselnden Höhen besteht.

4. Oberfläche nach Anspruch 1 oder 2, bei welcher das Muster aus einer symmetrischen Anordnung von Vorsprüngen mit drei unterschiedlichen Höhen besteht.

5. Oberfläche nach einem der vorhergehenden Ansprüche, bei welcher die Vorsprünge eine im wesentlichen kontinuierliche, in Spannrichtung verlaufende Anordnung bilden.

6. Oberfläche nach einem der vorhergehenden Ansprüche, bei welcher die Vorsprünge sich in Strömungsrichtung wenigstens über die Länge des turbulenten Grenzschichtbereichs der Oberfläche erstrecken.

7. Oberfläche nach einem der vorhergehenden Ansprüche, bei welcher wenigstens ein Vorsprung des Musters eine ausgeprägte Spitze aufweist.

8. Oberfläche nach Anspruch 7, bei welchem die ausgeprägte Spitze ein V-Form-Profil aufweist.

9. Oberfläche nach Anspruch 7, bei welcher die scharf ausgeprägten Vorsprünge ein Profil aufweisen, welches konkav gekrümmte Täler zwischen benachbarten Vorsprüngen besitzt.

10. Oberfläche nach einem der vorhergehenden Ansprüche, bei welcher am Boden flache Täler zwischen wenigstens einigen Vorsprüngen vorgesehen sind.

11. Oberfläche nach einem der vorhergehenden Ansprüche, bei welcher die effektive Höhe eines jeden Vorsprungs größerer Höhe relativ zu einer virtuellen Wandstellung, die durch die kleineren Vorsprünge unmittelbar benachbart gebildet ist, wenigstens drei Wandeinheiten beträgt, wobei eine Wandeinheit ein dimensionsloser Wert ist, der einem tatsächlichen Abstandswert multipliziert um eine skalare Größe entspricht, die die Veränderung der Wandscherbeanspruchung mit der Strömungsmitteldichte und Strömungsmittelviskosität ausdrückt.

12. Oberfläche nach einem der vorhergehenden Ansprüche, bei welcher die Höhe der Vorsprünge in Richtung der Strömung zunimmt.

13. Oberfläche nach Anspruch 12, bei welcher die Zunahme der Höhe stufenweise erfolgt und ein Vorsprung mit größerer Höhe des Musters, der vor einer Stufe liegt, der Vorsprung kleinerer Höhe des Musters wird, der der Stufe folgt.

14. Oberfläche nach einem der vorhergehenden Ansprüche, bei welcher wenigstens die Vorsprünge größerer Höhe Seitenflächen aufweisen, die unter einem Winkel geneigt sind, der sich über die Höhe der Vorsprünge ändert, wobei jede Seitenfläche einen Zwischenbereich mit einer geringeren Steilheit aufweist als benachbarte Bereiche über und unter dem Zwischenbereich und den Unterteil eines konkaven Profilspitzenwertes des zugeordneten Vorsprungs bildet.

15. Oberfläche nach Anspruch 14, bei welcher sämtliche Vorsprünge, die über eine virtuelle Wandhöhe vorstehen, Seitenwände mit der sich ändernden Steigung aufweisen, wobei der Zwischenbereich im wesentlichen in der virtuellen Wandhöhe liegt und die virtuelle Wandhöhe die Entfernung ist, um die die Turbulenz in der Grenzschicht von der Wandoberfläche durch die Vorsprünge versetzt wird.

16. Oberfläche nach einem der vorhergehenden Ansprüche, bei welcher wenigstens ein Spalt zwischen den Längen der Vorsprünge vorgesehen ist, wobei jede Spaltweite in Richtung der Strömung nicht größer ist als die Grenzschichtdicke ($\delta$).

17. Ein Körper mit einer aerodynamischen oder hydrodynamischen Wandoberfläche, die mit einer Reihe von Vorsprüngen gemäß einem der vorhergehenden Ansprüche ausgestattet ist.

FIG.1

FIG.2

FIG.3

FIG.4

FIG.5

FIG.6

FIG.7

FIG.8

FIG.9